# EUROPEAN PATENT SPECIFICATION

(11) **EP 4 374 062 B1**
(45) Date of publication and mention of the grant of the patent: **14.10.2026**
(21) Application number: 22846655.3
(22) Date of filing: 22.07.2022
(51) Int. Cl.: F03B 13/06, H02K 7/18

(54) **SUPPLYING AC ELECTRICITY FROM A PHOTOVOLTAIC SYSTEM WITHOUT AN ELECTRONIC POWER INVERTER**
WECHSELSTROMVERSORGUNG AUS EINER FOTOVOLTAISCHEN ANLAGE OHNE ELEKTRONISCHEN WECHSELRICHTER
ALIMENTATION EN ÉLECTRICITÉ À COURANT ALTERNATIF À PARTIR D'UN SYSTÈME PHOTOVOLTAÏQUE SANS ONDULEUR DE PUISSANCE ÉLECTRONIQUE

(30) Priority: 23.07.2021 US 202117443308
(43) Date of publication of application: 29.05.2024
(73) Proprietor: Trane International Inc., Davidson, NC 28036 (US)
(72) Inventor: DAY, Michael Sean, Davidson, NC 28036 (US)
(74) Representative: Haseltine Lake Kempner LLP
(86) International application number: PCT/US2022/037962
(87) International publication number: WO 2023/004091

(56) References cited:
- KR-A- 20120 014 999
- RU-C2- 2 612 499
- US-A- 4 132 901
- US-A- 4 272 685
- US-A- 5 420 463
- US-A- 5 420 463
- US-A1- 2005 034 452
- US-A1- 2009 160 192
- US-A1- 2010 253 080
- US-A1- 2012 299 304
- US-A1- 2013 113 220
- US-B1- 6 445 078
- US-B1- 7 956 485
- US-B2- 7 866 919
- US-B2- 8 008 796

## Description

### TECHNOLOGICAL FIELD

The present disclosure relates generally to electricity generation, and in particular, converting direct current (DC) electricity to alternating current (AC) electricity without an electronic power inverter.

### BACKGROUND

The demand for renewable energy has grown for a number of years, and photovoltaics (PV) in which light is converted to electricity is one prevalent renewable energy source. Most if not all PV systems convert light into direct current (DC) electricity, and use conventional electronic power inverters to convert the DC electricity to alternating current (AC) electricity that is used in many buildings and other load facilities. These electronic power inverters, however, are subject to certain issues that limit their value.

The AC electricity produced by many electronic power inverters includes has a waveform that is synthetically produced by rapid switching. The AC electricity therefore inherently suffers from some degree of total harmonic distortion, which degrades the power quality of the electrical energy produced. The lack of any inertia in an electronic power inverter also leads to additional power quality issues that often necessitate difficult and expensive mitigation when connecting to a power grid. Due to having switching components only weighing a gram or less, electronic synthetic waveform producing components are also much more susceptible to thermal damage from transients such as natural or man-made electromagnetic weather.

It would therefore be desirable to have a system and method that takes into account at least some of the issues discussed above, as well as other possible issues.

US 2013/113220 A1 describes a fluid-driven power generation apparatus and system for generating electricity and method of assembling the fluid-driven power generation apparatus. The fluid-driven power generation apparatus and system comprises a container for containing a fluid, such as water. An electrically operable pump pumps the fluid from the container to a nozzle disposed near a turbine wheel. The pump is powered by batteries, so that the pump operates pollution-free without combustion of fossil fuels. Fluid from the nozzle jets onto the turbine wheel to rotate the turbine wheel. The nozzle and turbine wheel are configured so that optimal rotation of the turbine wheel is achieved for efficient electricity generation. An electrical generator coupled to the turbine wheel generates electricity as the turbine wheel rotates. The electricity generated is supplied to an end user and any excess electricity is provided to an electrical transmission grid.

### BRIEF SUMMARY

The invention is defined in the attached independent claims to which reference should now be made. Further, optional features may be found in the sub-claims appended thereto.

Example implementations provide an improved system and method of supplying alternating current (AC) electricity in which direct current (DC) electricity from a source of electric power such as a photovoltaic (PV) system is converted to AC electricity without an electronic power inverter. Example implementations instead use hydraulically-coupled motor generation, which provides a number of benefits over current electronic power inverter-based systems. In particular, for example, as example implementations of the present disclosure are based on an analog generation technology, the AC electricity may have a cleaner waveform in terms of total harmonic distortion.

Example implementations may employ a generator to generate the AC electricity from a water-driven turbine. The generator may have inertia that enables an inherent ride through capability that an electronic power inverter does not possess. This may be of greater benefit to a power system from a power quality standpoint than a system in which an electronic power inverter without inertia is used. Conversely, the system of example implementations with inertia and analog output has fewer negative impacts on the power grid power, which may also lead to fewer and less expensive network upgrades. This reduction in interconnection cost, complexity, and time may be of substantial benefit to project developers. Additionally, when seeking a utility off-taker for power, the system of example implementations may be easier for one to market its high power quality output, which may provide a competitive advantage over systems that use a conventional electronic power inverter.

Example implementations of the present disclosure also lends itself to incorporation of lower-cost energy storage in the form of hydraulic storage at altitude, such as a water tank on a hill or another elevation. Unlike traditional energy storage such as lithium ion batteries, water storage tanks and water supply networks that provide this energy storage attribute may be discharge insensitive in that they can be charged and discharged multiple times per day for decades with no loss of capability. This storage may also allow the system of example implementations to operate in a multiple-use configuration in which the same storage tanks used for the energy generation may also be used for other purposes such as a municipal water supply, or as a water supply for other purposes such as for fire protection or industrial purposes.

### BRIEF DESCRIPTION OF THE FIGURE(S)

Having thus described example implementations of the disclosure in general terms, reference will now be made to the accompanying figures, which are not necessarily drawn to scale, and wherein:
FIG. 1 illustrates a system for supplying alternating current (AC) electricity, according to various example implementations of the present disclosure;
FIG. 2 illustrates an electric transmission and distribution system according to various example implementations; and
FIGS. 3A, 3B, 3C and 3D are flowcharts illustrating various steps in a method of supplying AC electricity, according to various example implementations.

### DETAILED DESCRIPTION

Some implementations of the present disclosure will now be described more fully hereinafter with reference to the accompanying figures, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. Like reference numerals refer to like elements throughout.

Unless specified otherwise or clear from context, references to first, second or the like should not be construed to imply a particular order. A feature described as being above another feature (unless specified otherwise or clear from context) may instead be below, and vice versa; and similarly, features described as being to the left of another feature else may instead be to the right, and vice versa. Also, while reference may be made herein to quantitative measures, values, geometric relationships or the like, unless otherwise stated, any one or more if not all of these may be absolute or approximate to account for acceptable variations that may occur, such as those due to engineering tolerances or the like.

As used herein, unless specified otherwise or clear from context, the "or" of a set of operands is the "inclusive or" and thereby true if and only if one or more of the operands is true, as opposed to the "exclusive or" which is false when all of the operands are true. Thus, for example, "[A] or [B]" is true if [A] is true, or if [B] is true, or if both [A] and [B] are true. Further, the articles "a" and "an" mean "one or more," unless specified otherwise or clear from context to be directed to a singular form. Furthermore, it should be understood that unless otherwise specified, the terms "data," "content," "digital content," "information," "observation" and similar terms may be at times used interchangeably.

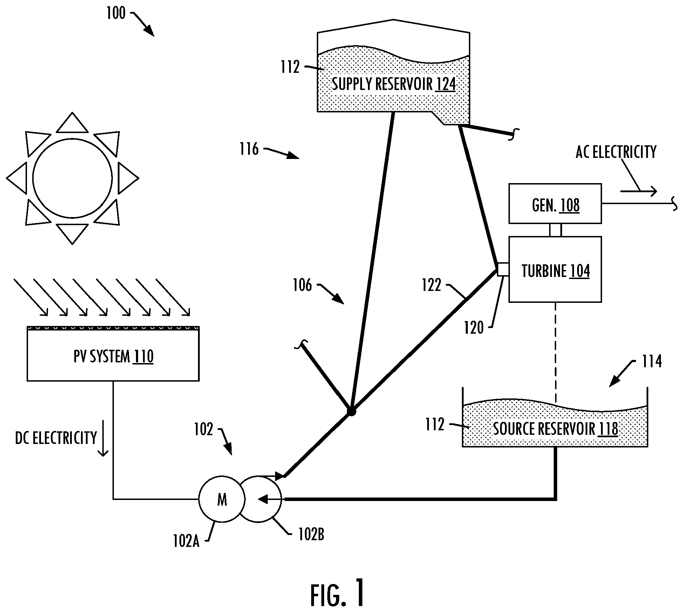

As indicated above, example implementations of the present disclosure are generally directed to electricity generation, and in particular, converting direct current (DC) electricity from a source of electric power such as a photovoltaic (PV) system to alternating current (AC) electricity. FIG. 1 illustrates a system **100** for supplying AC electricity according to some example implementations of the present disclosure. As shown, the system includes a motorized pump **102,** a turbine **104** such as a water turbine, a water supply network **106,** and an electric generator **108.** The motorized pump is configured to receive DC electricity from a source of electric power such as a PV system **110.** Other examples of suitable sources of electric power include one or more batteries, as well as other renewable power systems such as a wind power system, wind farm or the like.

The motorized pump **102** is configured to convert the DC electricity to first motive power to move water **112** from a source location **114** to at least one supply location **116.** In some examples, the motorized pump includes a DC motor **102A** configured to drive a pump **102B.** In other examples, the motorized pump may include a variable-frequency drive with an AC induction motor that is configured to drive a pump. In yet other examples in which the system may include a front-end electronic power inverter, the motorized pump may include an electronic power inverter to convert the DC electricity to AC electricity. In these examples, an AC induction motor may convert the AC electricity to the first motive power.

The water supply network **106** is generally a network of components that carry water **112** throughout the system **100.** The water supply network may include a pipe network for distribution of the water. Additionally, the water supply network may include or connect to one or more natural or artificial reservoirs of water, which in some more particular examples may include storage tanks. In this regard, some example implementations contemplate a source reservoir that may be a storage tank such as a fixed roof tank.

In particular, the water supply network **106** is configured to carry water **112** from the source location **114** to the at least one supply location **116.** The water supply network is also configured to carry the water that is supplied from the at least one supply location to the turbine **104.** The turbine, then, is configured to convert kinetic energy of the water supplied from the at least one supply location to second motive power. The second motive power may also be produced from any inertia in the turbine. The electric generator **108** is connected to the turbine, and configured to convert the second motive power to the AC electricity, and supply the AC electricity. The system **100** of example implementations of the present disclosure is therefore configured to convert the DC electricity produced by the source of electric power (e.g., PV system **110)** to AC electricity, in various examples without an electronic power inverter or other similar power electronic device or circuitry.

In some examples, the source location **114** is at a source reservoir **118** from which the motorized pump **102** is configured to draw the water **112** that is moved to the at least one supply location **116,** and supplied to the turbine **104** by the water supply network **106.** In some of these examples, the turbine is further configured to return the water from the turbine back to the source reservoir as the kinetic energy of the water is converted to the second motive power. The system **100** may therefore be discharge insensitive in that they can be charged and discharged multiple times per day for decades with no loss of capability.

The at least one supply location **116** includes a coupling **120** connected to the turbine **104.** The motorized pump **102** is configured to move the water **112** to the coupling from which the water is supplied directly to the turbine. The water supply network **106,** then, may include a penstock **122** connected to the coupling, and that controls supplies water to the turbine. The kinetic energy of the water, then, is from movement of the water through the penstock to the coupling and thereby the turbine.

Additionally the at least one supply location **116** includes a supply reservoir **124** located at a higher elevation than the turbine **104,** and from which the water **112** may be supplied to the turbine (in some examples also by way of the coupling **120).** In examples including these multiple supply locations, the turbine is supplied the water from either or both the coupling (directly) or the supply reservoir (in which case the water may also be supplied to the turbine from the coupling). In this regard, the water is supplied on a continuum from entirely the coupling, to some combination of the coupling and the supply reservoir, to entirely the supply reservoir. In other examples, the water may be supplied from the supply reservoir without a more direct supply of water from the motorized pump **102.**

In more particular examples including multiple supply locations, an operator may control the water **112** to the turbine **102** from the motorized pump **102,** the supply reservoir **124,** or some combination of the supply locations. This control of the water supply may be based on a number of factors, and may vary over one or more time intervals.

In some examples, the water **112** may be supplied from either supply location to the extent the system **100** is able to produce a sufficient amount of AC electricity, and supplement with a supply of water from the other supply location to address any deficiency in the amount of AC electricity being produced. In another example, the water may be supplied from the motorized pump **102** when sufficient DC electricity is available to power the motorized pump, and from the supply reservoir **124** when the DC electricitiy is unavailable. This may vary by time of day for a source of electric power such as a PV system **110,** or by environmental conditions for another renewable power system such as a wind power system. Similarly, the water may be supplied from the supply reservoir when sufficient sufficient water is available from the supply reservoir to drive the turbine **104,** and from the motorized pump when sufficient water is unavailable from the supply reservoir.

The supply reservoir **124** may also function as an external supply reservoir for an external water supply system, or the motorized pump may be further configured to move water to an external supply location for an external water supply system. The motorized pump **102,** then, may be configured to move the water **112** to the coupling **120** from which the water is supplied to the turbine, and move the water to the external supply reservoir for the external water supply system configured to supply the water independent of the AC electricity supplied by the electric generator **108.** This external water supply may then use the water for other purposes such as a municipal water supply, or as a water supply for other purposes such as for fire protection or industrial purposes.

In some examples, the electric generator **108** is configured to supply the AC electricity to an electric transmission and distribution (T&D) system that includes a power grid through which the AC electricity is delivered to one or more load facilities. Additionally or alternatively, the electric generator may be configured to supply the AC electricity to a load facility independent of such an electric T&D system. In this regard, the system **100** may be considered a generation facility that is part of or independent of a T&D system through which AC electricity is delivered to load facilities, which may be the case in some examples in which the system and load facilities are part of a microgrid.

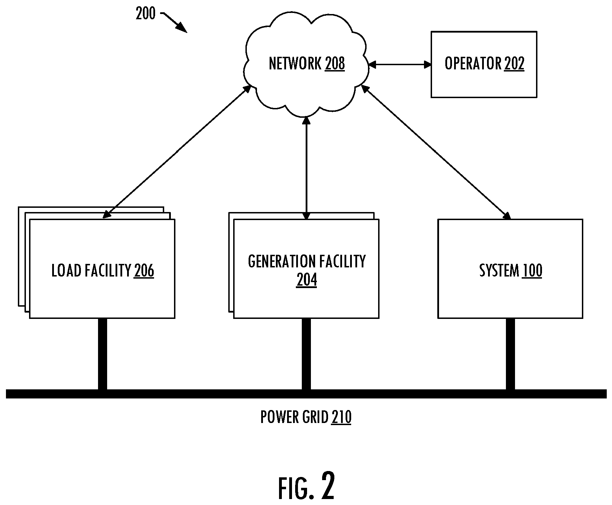

FIG. 2 illustrates an electric T&D system **200** according to various example implementations of the present disclosure. As shown, the T&D system includes at least one system operator (at times more simply referred to as an operator **202).** In various examples, the operator may be an independent system operator (ISO), transmission system operator (TSO), distribution system operator (DSO) or the like. The operator is in operable communication with at least one generation facility **204** and at least one load facility **206.** In some examples, the operator, load facility and/or generation facility may communicate with one another across one or more networks **208** such as one or more telecommunications networks, computer networks or the like. In this regard, the system operator, load facility and/or generation facility may be wired or wirelessly coupled to the one or more networks.

The operator **202** may be configured to coordinate, control and monitor a power grid **210** (at times referred to as a T&D grid), including the transmission and/or distribution of electric power on the power grid. The generation facility **204** is configured to contribute power into the power grid through which power is delivered to the load facilities **206.** In this regard, again, the system **100** of example implementations may be configured to implement a generation facility. The load facilities are generally facilities configured to draw power from the power grid. The load facilities include any consumer of electrical power, such as industrial facilities, institutional facilities, commercial facilities, residential facilities and the like. In some examples, the load facilities include buildings such as industrial buildings, institutional buildings, commercial buildings, residential buildings and the like. Even further, examples of suitable commercial buildings include office buildings, warehouses, retail buildings and the like.

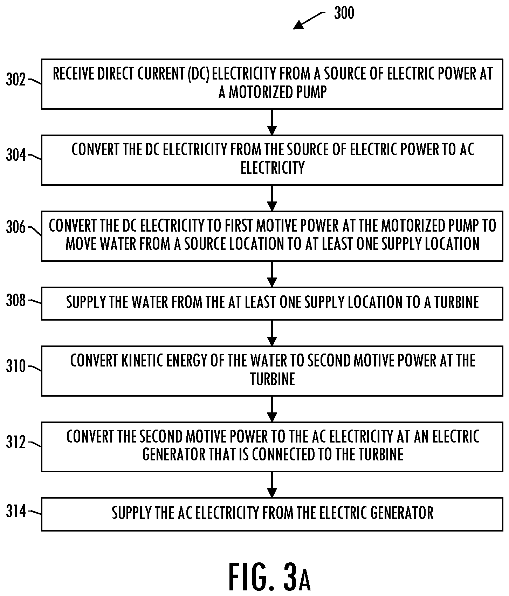

FIGS. 3A - 3D are flowcharts illustrating various steps in a method **200** of supplying AC electricity, according to various example implementations of the present disclosure. The method includes receiving DC electricity from a source of electric power (e.g., a PV system) at a motorized pump, as shown at block **302** of FIG. 3A. The method includes converting the DC electricity from the source of electric power to AC electricity, as shown at block **304.**

As also shown, converting the DC electricity to AC electricity includes converting the DC electricity to first motive power at the motorized pump to move water from a source location to at least one supply location, as shown at block **306.** The method includes supplying the water from the at least one supply location to a turbine, as shown at block **308.** The method includes converting kinetic energy of the water to second motive power at the turbine, as shown at block **310.** And the method includes converting the second motive power to the AC electricity at an electric generator that is connected to the turbine, and supplying the AC electricity from the electric generator, as shown at blocks **312** and **314.**

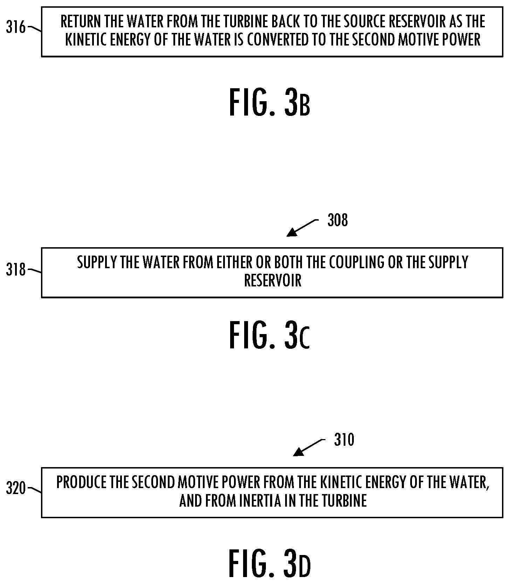

In some examples, the source location is at a source reservoir from which the motorized pump draws the water that is moved to the at least one supply location and supplied to the turbine. In some of these examples, the method **300** further includes returning the water from the turbine back to the source reservoir as the kinetic energy of the water is converted to the second motive power, as shown at block **316** of FIG. 3B.

In some examples, the at least one supply location includes a coupling connected to the turbine. In some of these examples, the motorized pump moves the water to the coupling from which the water is supplied directly to the turbine, and the kinetic energy of the water is from movement of the water to the coupling and thereby the turbine.

In some further examples, the at least one supply location further includes a supply reservoir located at a higher elevation than the turbine, and supplying the water at block **308** includes supplying the water from either or both the coupling or the supply reservoir, as shown at block **318** of FIG. 3C.

In some examples, the DC electricity is converted to the first motive power at the motorized pump at block **306** to move the water to the coupling from which the water is supplied to the turbine, and move the water to an external supply reservoir for an external water supply system that supplies the water independent of supplying the AC electricity.

In some examples, the at least one supply location includes a supply reservoir located at a higher elevation than the turbine, and gravitational potential energy of the water at the supply reservoir is converted to the kinetic energy of the water from movement of the water as the water is supplied to the turbine at block **308.**

In some examples, converting the kinetic energy at block **310** includes the turbine producing the second motive power from the kinetic energy of the water, and from inertia in the turbine, as shown at block **320** of FIG. 3D.

In some examples, the AC electricity is supplied at block **314** to an electric transmission and distribution system that includes a power grid through which the AC electricity is delivered to one or more load facilities.

In some examples, the AC electricity is supplied at block **314** from the electric generator to a load facility independent of an electric transmission and distribution system that includes a power grid through which AC electricity is delivered.

In some examples, the DC electricity is converted to the first motive power at the motorized pump at block **306** to move the water to the at least one supply location, and move the water to an external supply location for an external water supply system that supplies the water independent of supplying the AC electricity.

Many modifications and other implementations of the disclosure set forth herein will come to mind to one skilled in the art to which the disclosure pertains having the benefit of the teachings presented in the foregoing description and the associated figures. Therefore, it is to be understood that the disclosure is not to be limited to the specific implementations disclosed and that modifications and other implementations are intended to be included within the scope of the appended claims. Moreover, although the foregoing description and the associated figures describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system (100) for supplying alternating current (AC) electricity, the system (100) comprising:
a motorized pump (102) configured to receive direct current (DC) electricity from a source of electric power (110), and convert the DC electricity to first motive power to move water (112) from a source location (114) to at least one supply location (116);
a turbine (104) configured to convert kinetic energy of the water (112) supplied from the at least one supply location (116) to second motive power;
a water supply network (106) configured to carry the water (112) as the water is moved from the source location (114) to the at least one supply location (116), and supplied from the at least one supply location (116) to the turbine (104);
wherein the at least one supply location (116) includes
a coupling (120) connected to the turbine (104), wherein the motorized pump (102) is configured to move the water to the coupling (120) from which the water is supplied directly to the turbine (104); and
a supply reservoir (124), wherein the supply reservoir (124) is located at a higher elevation than the turbine (104); and
wherein the system (100) is configured so that the turbine is supplied the water from either or both of the coupling or the supply reservoir, on a continuum from entirely and directly from the coupling, to a combination of the coupling and the supply reservoir, to entirely the supply reservoir; and
an electric generator (108) connected to the turbine (104), the electric generator configured to convert the second motive power to the AC electricity, and supply the AC electricity.

2. The system of claim 1, wherein the source location (114) is at a source reservoir (118) from which the motorized pump (102) is configured to draw the water (112) that is moved to the at least one supply location (116) and supplied to the turbine (104) by the water supply network (106), and
wherein the turbine (104) is further configured to return the water (112) from the turbine (104) back to the source reservoir (118) as the kinetic energy of the water is converted to the second motive power.

3. The system of claim 1 or 2, wherein the kinetic energy of the water (112) is from movement of the water to the coupling (120) and thereby the turbine (104).

4. The system of any one of claims 1-3, wherein the electric generator (108) is configured to supply the AC electricity to:
an electric transmission and distribution system (200) that includes a power grid (210) through which the AC electricity is delivered to one or more load facilities (206); and/or
a load facility independent of an electric transmission and distribution system that includes a power grid through which AC electricity is delivered.

5. The system of any one of claims 1-4, wherein the motorized pump (102) is configured to convert the DC electricity to the first motive power at the motorized pump (102) to move the water (112) to the at least one supply location (116), and move the water to an external supply location for an external water supply system configured to supply the water independent of the AC electricity supplied by the electric generator (108).

6. A method (300) of supplying alternating current (AC) electricity, the method comprising:
receiving (302) direct current (DC) electricity from a source of electric power at a motorized pump;
converting (304) the DC electricity from the source of electric power to AC electricity, including at least:
converting (306) the DC electricity to first motive power at the motorized pump to move water from a source location to at least one supply location;
supplying (308) the water from the at least one supply location to a turbine;
converting (310) kinetic energy of the water to second motive power at the turbine; and
converting (312) the second motive power to the AC electricity at an electric generator that is connected to the turbine; and
supplying (314) the AC electricity from the electric generator;
wherein the at least one supply location includes:
a coupling connected to the turbine, wherein the motorized pump is configured to move the water to the coupling from which the water is supplied directly to the turbine; and
a supply reservoir, wherein the supply reservoir is located at a higher elevation than the turbine; and
wherein the turbine is supplied with the water from either or both the coupling or the supply reservoir (318) on a continuum from entirely and directly from the coupling, to a combination of the coupling and the supply reservoir, to entirely the supply reservoir.

7. The method of claim 6, wherein the source location is at a source reservoir from which the motorized pump draws the water that is moved to the at least one supply location and supplied to the turbine, and the method further comprises returning (316) the water from the turbine back to the source reservoir as the kinetic energy of the water is converted to the second motive power.

8. The method of claim 6 or 7, wherein the kinetic energy of the water is from movement of the water to the coupling and thereby the turbine.

9. The method of any one of claims 6-8, wherein the AC electricity is supplied to:
an electric transmission and distribution system that includes a power grid through which the AC electricity is delivered to one or more load facilities; and/or
to a load facility independent of an electric transmission and distribution system that includes a power grid through which AC electricity is delivered.

10. The method of any one of claims 6-9, wherein the DC electricity is converted to the first motive power at the motorized pump to move the water to the at least one supply location, and move the water to an external supply location for an external water supply system that supplies the water independent of supplying the AC electricity.

11. The system of claim 3 and optionally claims 4 or 5, or the method of any one of claims 8 and optionally claims 9 or 10, wherein the motorized pump is configured to convert the DC electricity to the first motive power to move the water to the coupling from which the water is supplied to the turbine, and move the water to an external supply reservoir for an external water supply system configured to supply the water independent of the AC electricity supplied by the electric generator.

12. The system of any one of claims 1-5, or the method of any one of claims 6-11, wherein gravitational potential energy of the water at the supply reservoir is converted to the kinetic energy of the water from movement of the water as the water is supplied to the turbine.

13. The system of any one of claims 1-5, or the method of any one of claims 6-12, wherein the turbine is configured to produce (320) the second motive power from the kinetic energy of the water, and from inertia in the turbine.

## Patentansprüche

1. System (100) zur Versorgung mit Wechselstrom(AC)-Elektrizität, wobei das System (100) umfasst:
eine Motorpumpe (102), dazu ausgelegt, Gleichstrom(DC)-Elektrizität von einer elektrischen Stromquelle (110) zu empfangen und den Gleichstrom in erste Antriebskraft umzuwandeln, um Wasser (112) von einem Quellenstandort (114) zu wenigstens einem Versorgungsstandort (116) zu bewegen;
eine Turbine (104), dazu ausgelegt, kinetische Energie des Wassers (112), das von dem wenigstens einen Versorgungsstandort (116) zugeführt wird, in zweite Antriebskraft umzuwandeln;
ein Wasserversorgungsnetz (106), dazu ausgelegt, das Wasser (112) zu führen, wenn das Wasser von dem Quellenstandort (114) zu dem wenigstens einen Versorgungsstandort (116) bewegt wird und von dem wenigstens einen Versorgungsstandort (116) der Turbine (104) zugeführt wird;
wobei der wenigstens eine Versorgungsstandort (116) umfasst
eine Kupplung (120), die mit der Turbine (104) verbunden ist, wobei die Motorpumpe (102) dazu ausgelegt ist, das Wasser zu der Kupplung (120) zu bewegen, von der das Wasser direkt der Turbine (104) zugeführt wird; und
einen Vorratsbehälter (124), wobei der Vorratsbehälter (124) in einer höheren Höhe als die Turbine (104) angeordnet ist; und
wobei das System (100) so ausgelegt ist, dass der Turbine das Wasser von einem oder beiden von der Kupplung und dem Vorratsbehälter zugeführt wird, in einem Kontinuum von vollständig und direkt von der Kupplung über eine Kombination der Kupplung und des Vorratsbehälters bis zu vollständig von dem Vorratsbehälter; und
einen elektrischen Generator (108), der mit der Turbine (104) verbunden ist, wobei der elektrische Generator dazu ausgelegt ist, die zweite Antriebskraft in den Wechselstrom umzuwandeln und den Wechselstrom zu liefern.

2. System nach Anspruch 1, wobei sich der Quellenstandort (114) an einem Quellenreservoir (118) befindet, wobei die Motorpumpe (102) dazu ausgelegt ist, daraus das Wasser (112) zu ziehen, das zu dem wenigstens einen Versorgungsstandort (116) bewegt und durch das Wasserversorgungsnetz (106) der Turbine (104) zugeführt wird, und
wobei die Turbine (104) ferner dazu ausgelegt ist, das Wasser (112) von der Turbine (104) zu dem Quellenreservoir (118) zurückzuführen, während die kinetische Energie des Wassers in die zweite Antriebskraft umgewandelt wird.

3. System nach Anspruch 1 oder 2, wobei die kinetische Energie des Wassers (112) aus Bewegung des Wassers zu der Kupplung (120) und dadurch zu der Turbine (104) folgt.

4. System nach einem der Ansprüche 1-3, wobei der elektrische Generator (108) dazu ausgelegt ist, den Wechselstrom zu liefern an:
ein elektrisches Übertragungs- und Verteilungssystem (200), das ein Stromnetz (210) umfasst, durch das der Wechselstrom an eine oder mehrere Lasteinrichtungen (206) geliefert wird; und/oder
eine Lasteinrichtung, die unabhängig ist von einem elektrischen Übertragungs- und Verteilungssystem, das ein Stromnetz umfasst, durch das Wechselstrom geliefert wird.

5. System nach einem der Ansprüche 1-4, wobei die Motorpumpe (102) dazu ausgelegt ist, den Gleichstrom in die erste Antriebskraft an der Motorpumpe (102) umzuwandeln, um das Wasser (112) zu dem wenigstens einen Versorgungsstandort (116) zu bewegen und das Wasser zu einem externen Versorgungsstandort für ein externes Wasserversorgungssystem zu bewegen, das dazu ausgelegt ist, das Wasser unabhängig von dem durch den elektrischen Generator (108) gelieferten Wechselstrom zu liefern.

6. Verfahren (300) zur Versorgung mit Wechselstrom(AC)-Elektrizität, wobei das Verfahren umfasst:
Empfangen (302) von Gleichstrom(DC)-Elektrizität von einer elektrischen Stromquelle an einer Motorpumpe;
Umwandeln (304) des Gleichstroms von der elektrischen Stromquelle in Wechselstrom, umfassend wenigstens:
Umwandeln (306) des Gleichstroms in erste Antriebskraft an der Motorpumpe, um Wasser von einem Quellenstandort zu wenigstens einem Versorgungsstandort zu bewegen;
Zuführen (308) des Wassers von dem wenigstens einen Versorgungsstandort zu einer Turbine;
Umwandeln (310) kinetischer Energie des Wassers zweite Antriebskraft an der Turbine; und
Umwandeln (312) der zweiten Antriebskraft in den Wechselstrom an einem elektrischen Generator, der mit der Turbine verbunden ist; und
Liefern (314) des Wechselstroms von dem elektrischen Generator;
wobei der wenigstens eine Versorgungsstandort umfasst:
eine Kupplung, die mit der Turbine verbunden ist, wobei die Motorpumpe dazu ausgelegt ist, das Wasser zu der Kupplung zu bewegen, von der das Wasser direkt der Turbine zugeführt wird; und
ein Versorgungsreservoir, wobei das Versorgungsreservoir in einer höheren Höhe als die Turbine angeordnet ist; und
wobei die Turbine mit dem Wasser von einem oder beiden von der Kupplung oder dem Vorratsbehälter (318) zugeführt wird, in einem Kontinuum von vollständig und direkt von der Kupplung über eine Kombination der Kupplung und des Vorratsbehälters bis zu vollständig von dem Vorratsbehälter.

7. Verfahren nach Anspruch 6, wobei sich der Quellenstandort an einem Quellenreservoir befindet, aus dem die Motorpumpe das Wasser zieht, das zu dem wenigstens einen Versorgungsstandort bewegt und der Turbine zugeführt wird, und das Verfahren ferner Zurückführen (316) des Wassers von der Turbine zurück zu dem Quellenreservoir umfasst, während die kinetische Energie des Wassers in die zweite Antriebskraft umgewandelt wird.

8. Verfahren nach Anspruch 6 oder 7, wobei die kinetische Energie des Wassers aus Bewegung des Wassers zu der Kopplung und dadurch zu der Turbine folgt.

9. Verfahren nach einem der Ansprüche 6-8, wobei der Wechselstrom zugeführt wird zu:
einem elektrischen Übertragungs- und Verteilungssystem, das ein Stromnetz umfasst, durch das der Wechselstrom an eine oder mehrere Lasteinrichtungen geliefert wird; und/oder
zu einer Lasteinrichtung, die unabhängig ist von einem elektrischen Übertragungs- und Verteilungssystem, das ein Stromnetz umfasst, durch das Wechselstrom geliefert wird.

10. Verfahren nach einem der Ansprüche 6-9, wobei der Gleichstrom an der Motorpumpe in die erste Antriebskraft umgewandelt wird, um das Wasser zu dem wenigstens einen Versorgungsstandort zu bewegen und das Wasser zu einem externen Versorgungsstandort für ein externes Wasserversorgungssystem zu bewegen, das das Wasser unabhängig von der Versorgung mit dem Wechselstrom liefert.

11. System nach Anspruch 3 und gegebenenfalls Ansprüchen 4 oder 5 oder Verfahren nach einem der Ansprüche 8 und gegebenenfalls Ansprüchen 9 oder 10, wobei die Motorpumpe dazu ausgelegt ist, den Gleichstrom in die erste Antriebskraft umzuwandeln, um das Wasser zu der Kupplung zu bewegen, von der das Wasser der Turbine zugeführt wird, und Bewegen des Wassers zu einem externen Versorgungsbehälter für ein externes Wasserversorgungssystem, das dazu ausgelegt ist, das Wasser unabhängig von dem durch den elektrischen Generator gelieferten Wechselstrom zu liefern.

12. System nach einem der Ansprüche 1-5 oder Verfahren nach einem der Ansprüche 6-11, wobei die Schwerkraft-Potentialenergie des Wassers an dem Versorgungsreservoir in die kinetische Energie des Wassers durch Bewegung des Wassers umgewandelt wird, während das Wasser der Turbine zugeführt wird.

13. System nach einem der Ansprüche 1-5 oder Verfahren nach einem der Ansprüche 6-12, wobei die Turbine dazu ausgelegt ist, die zweite Antriebskraft aus der kinetischen Energie des Wassers und aus Trägheit in der Turbine zu erzeugen (320).

## Revendications

1. Système (100) d'alimentation en électricité en courant alternatif (CA), le système (100) comprenant :
une pompe motorisée (102) conçue pour recevoir de l'électricité en courant continu (DC) depuis une source d'énergie électrique (110), et convertir l'électricité CC en première énergie motrice pour déplacer de l'eau (112) d'un emplacement source (114) à au moins un emplacement d'alimentation (116) ;
une turbine (104) conçue pour convertir l'énergie cinétique de l'eau (112) fournie depuis l'au moins un emplacement d'alimentation (116) en deuxième énergie motrice ;
un réseau d'alimentation en eau (106) conçu pour transporter l'eau (112) lorsque l'eau est déplacée de l'emplacement source (114) à l'au moins un emplacement d'alimentation (116), et fournie depuis l'au moins un emplacement d'alimentation (116) à la turbine (104) ;
l'au moins un emplacement d'alimentation (116) comprenant un raccordement (120) relié à la turbine (104), la pompe motorisée (102) étant conçue pour déplacer l'eau jusqu'au raccordement (120) depuis lequel l'eau est directement fournie à la turbine (104) ; et
un réservoir d'alimentation (124), le réservoir d'alimentation (124) étant situé à une plus grande altitude que la turbine (104) ; et
le système (100) étant conçu de telle sorte que la turbine fournit l'eau depuis le raccordement ou le réservoir d'alimentation, ou les deux, sur un continuum depuis entièrement et directement depuis le raccordement, en passant par une combinaison du raccordement et du réservoir d'alimentation, jusqu'à entièrement depuis le réservoir d'alimentation ; et
un générateur électrique (108) relié à la turbine (104), le générateur électrique étant conçu pour convertir la deuxième énergie motrice en électricité CA, et fournir l'électricité CA.

2. Système de la revendication 1, dans lequel l'emplacement source (114) se situe au niveau d'un réservoir source (118) depuis lequel la pompe motorisée (102) est conçue pour aspirer l'eau (112) qui est déplacée jusqu'à l'au moins un emplacement d'alimentation (116) et fournie à la turbine (104) par le réseau d'alimentation en eau (106), et
dans lequel la turbine (104) est en outre conçue pour renvoyer l'eau (112) de la turbine (104) au réservoir source (118) lorsque l'énergie cinétique de l'eau est convertie pour obtenir la deuxième énergie motrice.

3. Système de la revendication 1 ou 2, dans lequel l'énergie cinétique de l'eau (112) provient du mouvement de l'eau jusqu'au raccordement (120) et ainsi la turbine (104).

4. Système de l'une quelconque des revendications 1 à 3, dans lequel le générateur électrique (108) est conçu pour fournir l'électricité CA à :
un système de transport et de distribution électrique (200) qui comporte un réseau électrique (210) par lequel l'électricité CA est délivrée à une ou plusieurs installations consommatrices (206) ; et/ou
une installation consommatrice indépendante d'un système de transport et de distribution électrique qui comporte un réseau électrique par lequel de l'électricité CA est délivrée.

5. Système de l'une quelconque des revendications 1 à 4, dans lequel la pompe motorisée (102) est conçue pour convertir l'électricité CC pour obtenir la première énergie motrice au niveau de la pompe motorisée (102) afin de déplacer l'eau (112) jusqu'à l'au moins un emplacement d'alimentation (116), et déplacer l'eau jusqu'à un emplacement d'alimentation externe pour un système d'alimentation en eau externe conçu pour fournir l'eau indépendamment de l'électricité CA fournie par le générateur électrique (108).

6. Procédé (300) d'alimentation en électricité en courant alternatif (CA), le procédé comprenant :
la réception (302) d'électricité en courant continu (CC) depuis une source d'énergie électrique au niveau d'une pompe motorisée ;
la conversion (304) l'électricité CC provenant de la source d'énergie électrique en électricité CA, comportant au moins :
la conversion (306) de l'électricité CC en première énergie motrice au niveau de la pompe motorisée pour déplacer de l'eau d'un emplacement source à au moins un emplacement d'alimentation ;
la fourniture (308) de l'eau depuis l'au moins un emplacement d'alimentation à une turbine ;
la conversion (310) de l'énergie cinétique de l'eau en deuxième énergie motrice au niveau de la turbine ; et
la conversion (312) de la deuxième énergie motrice pour obtenir l'électricité CA au niveau d'un générateur électrique qui est relié à la turbine ; et
la fourniture (314) de l'électricité CA depuis le générateur électrique ;
l'au moins un emplacement d'alimentation comportant :
un raccordement relié à la turbine, la pompe motorisée étant conçue pour déplacer l'eau jusqu'au raccordement depuis lequel l'eau est directement fournie à la turbine ; et
un réservoir d'alimentation, le réservoir d'alimentation étant situé à une plus grande altitude que la turbine ; et
la turbine étant alimentée avec l'eau provenant du raccordement ou du réservoir d'alimentation (318), ou des deux, sur un continuum depuis entièrement et directement depuis le raccordement, en passant par une combinaison du raccordement et du réservoir d'alimentation, jusqu'à entièrement depuis le réservoir d'alimentation.

7. Procédé de la revendication 6, l'emplacement source se situant au niveau d'un réservoir source depuis lequel la pompe motorisée aspire l'eau qui est déplacée jusqu'à l'au moins un emplacement d'alimentation et fournie à la turbine, et le procédé comprenant en outre le renvoi (316) de l'eau depuis la turbine au réservoir source lorsque l'énergie cinétique de l'eau est convertie pour obtenir la deuxième énergie motrice.

8. Procédé de la revendication 6 ou 7, dans lequel l'énergie cinétique de l'eau provient du mouvement de l'eau jusqu'au raccordement et ainsi la turbine.

9. Procédé de l'une quelconque des revendications 6 à 8, dans lequel l'électricité CA est fournie à :
un système de transport et de distribution électrique qui comporte un réseau électrique par lequel l'électricité CA est délivrée à une ou plusieurs installations consommatrices ; et/ou
une installation consommatrice indépendante d'un système de transport et de distribution électrique qui comporte un réseau électrique par lequel de l'électricité CA est délivrée.

10. Procédé de l'une quelconque des revendications 6 à 9, dans lequel l'électricité CC est convertie pour obtenir la première énergie motrice au niveau de la pompe motorisée afin de déplacer l'eau jusqu'à l'au moins un emplacement d'alimentation, et déplacer l'eau jusqu'à un emplacement d'alimentation externe pour un système d'alimentation en eau externe qui fournit l'eau indépendamment de la fourniture de l'électricité CA.

11. Système de la revendication 3 et éventuellement des revendications 4 et 5, ou procédé de l'une quelconque des revendications 8 et éventuellement des revendications 9 et 10, dans lesquels la pompe motorisée est conçue pour convertir l'électricité CC pour obtenir la première énergie motrice afin de déplacer l'eau jusqu'au raccordement depuis lequel l'eau est fournie à la turbine, et déplacer l'eau jusqu'à un réservoir d'alimentation externe pour un système d'alimentation en eau externe conçu pour fournir l'eau indépendamment de l'électricité CA fournie par le générateur électrique.

12. Système de l'une quelconque des revendications 1 à 5, ou procédé de l'une quelconque des revendications 6 à 11, dans lesquels l'énergie potentielle gravitationnelle de l'eau au niveau du réservoir d'alimentation est convertie pour obtenir l'énergie cinétique de l'eau provenant du mouvement de l'eau lorsque l'eau est fournie à la turbine.

13. Système de l'une quelconque des revendications 1 à 5, ou procédé de l'une quelconque des revendications 6 à 12, dans lesquels la turbine est conçue pour produire (320) la deuxième énergie motrice à partir de l'énergie cinétique de l'eau, et à partir de l'inertie dans la turbine.
